# EUROPÄISCHE PATENTSCHRIFT

(11) **EP 0 946 343 B1**
(45) Veröffentlichungstag und Bekanntmachung des Hinweises auf die Patenterteilung: **13.11.2002**
(21) Anmeldenummer: 97952735.5
(22) Anmeldetag: 18.12.1997
(51) Int. Cl.: B28B 11/00, C04B 41/00

(54) **VERFAHREN ZUR STEIGERUNG DER RANDSCHICHTFESTIGKEIT AN OBERFLÄCHEN VON AUS SPRÖDHARTEN WERKSTOFFEN GEFERTIGTEN WERKSTÜCKEN**
METHOD FOR INCREASING BOUNDARY LAYER SOLIDITY ON SURFACES OF WORKPIECES MANUFACTURED FROM HARD BRITTLE MATERIALS
PROCEDE POUR AUGMENTER LA RESISTANCE DES COUCHES MARGINALES SUR DES SURFACES DE PIECES PRODUITES A PARTIR DE MATERIAUX DURS ET CASSANTS

(30) Priorität: 18.12.1996 DE 19652872
(43) Veröffentlichungstag der Anmeldung: 06.10.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: PFEIFFER, Wulf, D-79331 Nimburg (DE)
(74) Vertreter: Rösler, Uwe, Dipl.-Phys.
(86) Internationale Anmeldenummer: DE9702955
(87) Internationale Veröffentlichungsnummer: WO98026910

(56) Entgegenhaltungen:
- WO-A-89/04239
- US-A- 3 573 023
- US-A- 3 607 167
- US-A- 4 034 585
- US-A- 4 674 365

## Beschreibung

### Technisches Gebiet

Die Erfindung bezieht sich auf ein Verfahren zur Bestimmung von Verfahrensparameter zum nachfolgenden Durchführen eines Verfahrens zur Steigerung der Randschichtfestigkeit von aus keramischen Werkstoffen gefertigten Werkstücken.

### Stand der Technik

Die Forderung nach größtmöglicher Prozeßsicherheit bei verfahrenstechnischen Anlagen und der steigende Kostendruck in den Bereichen Wartung, Instandhaltung und Neubeschaffung von Anlagekomponenten sind der Hauptgrund für die gewachsenen Anforderungen an die Lagertechnik, beispielsweise in Rührwerken und Pumpen. Da Pumpen über einen weiten Temperaturbereich einsetzbar sein sollen und da Schmierstoffe, die zu Verunreinigungen führen können, vermieden werden müssen, ergeben sich neben der Forderung nach langer Lebensdauer und kostengünstigem Kosten-Leistungs- Verhältnis zusätzliche Anforderungen hinsichtlich der Trockenlaufeignung und der Medienschmierung.

Den vorstehenden Forderungen entsprechen insbesondere keramische Werkstoffe, die beispielsweise bei der Herstellung von Lagern, wie beispielsweise Wälzlagern und Gleitlagern, eingesetzt werden. Neben den nur geringen Verschleißerscheinungen spielt die hohe Temperaturbeständigkeit von keramischen Werkstoffen beim Einsatz derartiger Materialien eine große Rolle.

Ein wesentlicher Aspekt bezüglich des Einsatzes sprödharter Materialien, unter die keramische Materialien, wie beispielsweise Siliziumnitride, fallen, ist ihre Randschichtfestigkeit, durch die insbesondere der Materialverschleiß bzw. die Materialbeanspruchung bestimmt ist. Gerade für den Einsatz als Bauteile im Maschinen- und Anlagenbau, die aus teil- oder vollkeramischen Wälzlagern, Gleitlagern sowie aus keramischen Bauteilen oder keramischen Schutzschichten bestehen, bei denen ein hoher Widerstand gegen verschiedene Arten von Verschleiß, wie beispielsweise Gleit-, Strahl-, Wälz- oder Kavitationsverschleiß, gefordert wird, ist ein besonders hohes Maß an Randschichtfestigkeit der einzelnen Werkstücke wünschenswert.

Die gegenwärtige Auffassung bezüglich der Materialeigenschaften von hochspröden Materialien wie vorstehend aufgezählt, geht jedoch dahin, daß diese Materialien in ihren physikalischen Eigenschaften als "ausgereizt" eingeschätzt werden und eine weitere Steigerung ihrer Festigkeit über das natürliche Festigkeitsgefüge hinaus nicht möglich sei und nur durch den Einsatz noch teurerer Rohstoffen und Fertigungstechniken zu realisieren seien.

Zwar sind Verfahren zur Steigerung der Randschichtfestigkeit von sprödharten Materialien bekannt, doch sind die damit verbundenen erreichbaren Erfolge nicht zufriedenstellend. Hierzu zählen im einzelnen thermische und/oder chemische Behandlungsverfahren zur Beeinflussung der Oberflächeneigenschaften sprödharter Materialien.

Zu den thermischen Verfahren ist das thermische Härten zu zählen, bei dem der zu härtende Gegenstand zunächst erhitzt und nachfolgend möglichst kurzfristig, im Rahmen eines "Abschreckvorganges", abgekühlt wird . Derartige Härtungsverfahren werden vorzugsweise bei Gläsern angewendet, um gezielte Oberflächenspannungen im Glas zu erzeugen, wodurch die Bruchfestigkeit von Gläsern, beispielsweise Brillengläser oder Autoscheiben, erheblich gesteigert werden kann. Eine derartige Anwendung des thermischen Härtens bei sprödharten Materialien stößt jedoch insbesondere bei Keramiken auf erhebliche Schwierigkeiten, da in der Regel sogenannte Thermoschock-Schädigungen auf der Keramikoberfläche auftreten, wodurch Oberflächenrisse gebildet werden, die einer möglichen Randschichtfestigkeitserhöhung entscheidend entgegenwirken. Aus diesem Grunde sind derzeit keine praktisch durchführbare thermische Verfahren zum Härten von sprödharten Materialien, insbesondere Hochleistungskeramiken, bekannt.

Eine weitere Möglichkeit zur Steigerung der Randschichtfestigkeit von Keramiken besteht in der chemischen Veränderung der Randschicht durch Difussionsbehandlungen mit entsprechenden Medien bzw. Materialien. Auch dieses Verfahren hat bisher nur bei Gläsern oder teilkristallinen Gläsern Anwendung gefunden, der Versuch Hochleistungskeramiken mittels "chemischen Härtens" positiv zur Steigerung der Randschichtfestigkeit zu behandeln, schlug bislang fehl. Gründe hierfür sind u.a. die sehr hohen Temperaturen und langen Behandlungsdauern für den Härtevorgang, so daß derartige Verfahren bislang keine praktische Bedeutung erhielten.

Als dritte Alternative zur Steigerung der Randschichtfestigkeit bei sprödharten Materialien sind grundsätzlich auch mechanische Verfahren zu nennen, wie sie bei der Behandlung von Werkstücken aus Metallen in vielfacher Weise bekannt sind. So werden in an sich bekannter Weise metallische Bauteile zur mechanischen Randschichtverfestigung mittels geeigneter Werkzeuge mit Oberflächendruckeigenspannungen versehen, wodurch die Oberflächenfestigkeit derartiger metallischer Bauteile gesteigert werden kann. Eine entsprechende Festigkeitserhöhung bei sprödharten Materialien durch mechanische Randschichtbehandlungen ist bislang weder bekannt noch wird dies praktiziert. Vielmehr wird davon ausgegangen, daß bei mechanischer Beanspruchung der Randschicht von sprödharten Materialien aufgrund der spröden Eigenschaften eher Schädigungen als eine Festigkeitssteigerung an der Oberfläche bewirkt wird.

Mögliche bekannte Verfahren zur Steigerung der Randschichtfestigkeit von metallischen Bauteilen stellt beispielsweise das Kugelstrahlverfahren dar, das die Oberfläche der zu bearbeitenden Bauteile plastisch verformt. Ausdrücklich wird beispielsweise in der DE-A-43 11 319 auf Seite 5, Zeilen 14 und 15 ausgeführt, daß die bei metallischen Bauteilen erhältliche Randschichtfestigkeitssteigerung durch Anwendung von Kugelstahlstrahlen sich nicht bei keramischen Materialien einstellt, da sie einfach zu spröde sind, um der Strahlenergie zu widerstehen.

Generell werden sprödharten Materialien, wie beispielsweise Keramiken, die Fähigkeit zur plastischen Verformung bei Raumtemperatur abgesprochen. So geht aus einem Beitrag von J. Kriegesmann "Was ist neu an den Mechanokeramikwerkstoffen?", Keramische Zeitschrift, 39. Jahrgang, Nr. 1, 1997 auf Seite 32, linke Spalte das folgende Zitat hervor: "Im Gegensatz zu den Metallen findet der Bruch aber schon im elastischen Bereich des Spannungs-Dehnungs-Diagramms statt. Das mechanische Werkstoffverhalten von Keramiken ist damit spröde, was für die mechanische Anwendung äußerst nachteilig zu sein scheint. Wird nämlich auf einen keramischen Werkstoff eine elastische Energie übertragen, so hat auch er wieder das Bestreben, diese Energie abzubauen. Die Keramik hat aber nur die Möglichkeit, dies durch Bruch zu erreichen."

Ein weiteres Zitat geht aus der Festschrift zu Ehren Herrn Prof. Eckard Macherauch, ISBN 3-88355-176-7 auf Seite 611, 3. Absatz hervor: "Keramische Werkstoffe zeigen in vielen Fällen praktisch rein elastisches Verhalten und brechen bei überkritischer Beanspruchung katastrophal."

Ebenso geht aus dem Beitrag von Dr. Prümmer, "Möglichkeiten zur Festigkeitssteigerung von keramischen Werkstoffen durch Oberflächendruckeigenspannungen", erschienen in Keramische Zeitschrift, 38. Jahrgang, Nr. 9, 1986 auf Seite 512, rechte Spalte hervor: "Eine Verfestigung von keramischen Werkstoffen in dem Maße, wie sie bei metallenen Werkstoffoberflächen beim spanabhebenden Bearbeiten, Schleifen und Kugelstrahlen erreicht wird, ist bei keramischen Werkstoffen naturgemäß nicht zu erwarten".

Schließlich wird in einem Beitrag von F. Kroupa auf einem Beitrag zur "International Conference on Advanced Materials and Technologies", 13-16. Juni 1995, Prag, CZ konstatiert: "However, all ceramic materials known to date have insufficient dislocation mobility or manoeuvrability and the transition temperatures are very high. "

Die vorstehenden Zitate aus dem Stand der Technik zeigen, daß die Fachwelt generell der Auffassung ist, daß eine Oberflächenverfestigung von sprödharten Werkstoffen, insbesondere Keramiken, durch mechanische Einwirkungen nicht mögich sei.

Aus der US-A-3,573,023 ist ein Verfahren zur Steigerung der Randschichtfestigkeit an Oberflächen von aus sprödharten Werkstoffen gefertigten Werkstücken bekannt, wobei dieses Verfahren lediglich für die Anwendung bei sogenannten Hartmetallen (keramische Partikel in einer Metallmatix), Halbleitermaterialien und Gläsern bestimmt ist. Diese US-Schrift offenbart jedoch nicht die Bestimmung von den Verfahrensparametern, die für das Durchführen des Verfahrens zur Steigerung der Randschichtfestigkeit notwendig sind.

In der WO-A-89/04239 werden zwei Verfahren beschrieben. Dabei betrifft das erste Verfahren die Ausheilung von oberflächennahen Schädigungen in sprödharten Materialien durch plastische Verformung durch punkt- oder linienförmige Beanspruchung. Diese Beanspruchung soll vorzugsweise bei erhöhten Temperaturen von 0,3 bis 0,5 Schmelztemperatur (das bedeuted bei Keramiken einige 100°C) stattfinden, um ein Fließen von arteigenem oder fremdem Material in die vorhandenen Risse zu gewährleisten. In diesem Marterialtransport innerhalb der Randschicht wird der wesentliche Effekt zur Steigerung einer vorab durch Schädigung herabgesetzten Randschichtfestigkeit gesehen. Weiterhin wird darauf hingewiesen, daß unter Umständen eine gewisse Einwirkzeit erforderlich ist. Dies weist auf die Nutzung von Kriecheffekten hin.
Der zweite Teil der WO-A-89/04239 beschreibt ein Verfahren, das eine linienförmige Gleitbeanspruchung bei erhöhter Temperatur (0,5 Schmelztemperatur) nutzt, um eine Passung zwischen zwei Teilen sicherzustellen. Als wirksamer Prozeß wird hier ebenfalls "Kriechen" genannt. Weiterhin wird auf den Einfluß der Oberflächentopographie (Rauheit) hingewiesen, welche durch den Prozeß verändert wird. Auch hier wird die Bestimmung von den notwendigen Verfahrens parametern nicht angesprochen.

### Darstellung der Erfindung

Der Erfindung liegt daher die Aufgabe zugrunde, ein Verfahren zur Bestimmung von Verfahrensparameter zum nachfolgenden Durchführen eines Verfahrens zur Steigerung der Randschichtfestigkeit an Oberflächen von aus keramischen Werkstoffen gefertigten Werkstücken derart anzugeben, daß die Oberflächenfestigkeit dieser Materialien durch ein einfaches, kostengünstiges Bearbeitungsverfahren erheblich gesteigert werden kann. Es soll erreicht werden, daß die Widerstandsfähigkeit von im Anlagenbau verwendeten keramischen Werkstückteilen gesteigert wird.

Die Lösung der der Erfindung zugrundeliegenden Aufgabe ist im einzigen Patentanspruch angegeben.

Um die Einstellung der für den Erfolg notwendigen Verfahrensparameter zu bestimmen, sind erfindungsgemäß zwei Vorversuche durchzuführen:

An einer Platte aus dem zu behandelnden Werkstoff wird die Abhängigkeit der Druckfließgrenze und der Sprödbruchgrenze von der Werkzeuggeometrie ermittelt. Hierzu wird z.B. der statische Kugeldruckversuch eingesetzt, der beispielsweise aus dem Beitrag von T. Hollstein et. al., "Vollkeramische Wälzlager aus Siliziumnitrit: Anwendung, Auslegung und Optimierung", VDI-Berichte Nr. 1151, 1995, Seite 3-10, beschrieben ist. Als Werkzeugwerkstoff wird ein Werkstoff mit mindestens der gleichen Härte gewählt, wie sie das zu behandelnde Werkstück selbst besitzt. Als Werkzeugform wird für den Kontaktbereich zwischen Werkzeug und Werkstück eine möglichst glatte, abgerundete Form gewählt. Aus diesem Vorversuch ergibt sich die erforderliche Werkzeuggeometrie und der zulässige Impulseintrag.

In einem zweiten Schritt wird im Rahmen eines dynamischen Kugeldruckversuches ermittelt, welche Anzahl von wiederholten Kugeleindrücken pro Kontaktfläche zulässig sind, ohne dabei die Werkstückoberfläche zu schädigen aber zugleich die Oberfläche plastisch zu verformen. Auf diese Weise wird der zulässige Überdeckungsgrad, d.h. die Anzahl der Werkzeugeindrücke pro Kontaktfläche festgelegt.

Nach Festlegung der vorstehend beschriebenen Verfahrensparameter wird der oberflächenzubehandelnde Bereich des Werkstückes aus sprödhartem Material, beispielsweise im Rahmen eines Kugelstrahlverfahrens, behandelt. Gefährdete Ecken und Kanten des Werkstückes, die nicht behandelt werden sollen, sind durch Masken vor Beschädigungen zu schützen.

Die auf die Werkstückoberfläche eintreffenden kugelförmigen Werkzeugelemente können im Rahmen einer Strahlanlage per Druckluft oder mittels eines Schleuderradantriebes auf die Werkstückoberfläche mit einstellbarem kinetischen Impuls geschleudert werden, so daß jede Stelle der zu behandelnden Werkstückoberfläche ein- oder mehrfach getroffen wird.

Trotz der vorstehend umrissenen Vorurteile bei keramischen Materialien ist eine Steigerung der Randschichtfestigkeit durch mechanische Oberflächenbehandlung möglich. Es konnte bei spielsweise gezeigt werden, daß ein Werkstück aus Siliziumnitrit unter Verwendung von Kugelstrahl-Verfahren derart an seiner Oberfläche durch plastische Verformungen bearbeitet werden konnte, daß eine Steigerung der Randschichtfestigkeit von 15% erreicht werden konnte.

Das mechanische Verfahren zur Steigerung der Randschichtfestigkeit von sprödharten Materialien, insbesondere Keramiken, beruht insbesondere darauf, daß oberflächennahe Bereiche mit einem geeigneten Werkzeug lokal plastisch verformt werden und in der Oberfläche Druckeigenspannungen erzeugt werden, die den Betriebsbeanspruchungen, wie sie im Einsatz von aus Keramik gefertigten Wälzlagern beispielsweise herrschen, entgegenwirken können. Wesentlich bei der Durchführung der mechanischen Oberflächenbehandlungen ist, daß bei der Erzeugung plastischer Oberflächenverformungen nicht gleichzeitig Schädigungen in Form von Sprödbruchvorgängen an den Keramikoberflächen erzeugt werden, deren festigkeitsmindernde Wirkung größer ist, als die festigkeitssteigernde Wirkung durch die "Plastifizierung".

Die vorstehend genannte Forderung wird dadurch erreicht, daß zum einen die plastische Verformung auf lateral eng begrenzten Oberflächenbereichen beschränkt ist und zum anderen, das Werkzeug, mit dem die Oberfläche des zu behandelnden Werkstückes in Kontakt tritt, eine bestimmte Kontur im Bereich der Kontaktfläche aufweist, die allgemein beschrieben als nicht scharfkantig anzusehen ist.

Wird ein materialspezifischer und von der Form des Werkzeuges abhängiger Grenzwert für die Kontaktfläche zwischen Werkzeug und Oberfläche des zu bearbeitenden Werkstückes und für die Eindrucktiefe des Werkzeuges nicht überschritten, so kann durch eine wiederholte, lateral versetzte lokale Oberflächenbehandlung der gewünschte Effekt, der gezielt eingebrachten plastischen Verformung, oberflächendeckend erreicht werden.

Die vorstehend beschriebene Forderung wird insbesondere dadurch erfüllt, daß das Werkzeug eine geeignete Geometrie aufweist, die vorzugsweise von runder Kontur ist und einen vom Werkstoff des zu bearbeitenden Werkstückes abhängigen kritischen Werkzeugdurchmesser nicht überschreitet. Für den Fall einer Kugel, wie sie bei Kugelstrahlversuchen zum Einsatz kommen und der Verwendung von Siliziumnitrit als Werkstückmaterial haben sich geeignete Kugeldurchmesser von ca. 4 mm herausgestellt. Der vorstehend genannte kritische Durchmesser, der für die Dimensionierung der Kugel bestimmend ist, definiert auch den eng begrenzten Oberflächenbereich, innerhalb dem die plastische Verformung auf der Oberfläche des zu bearbeitenden Werkstückes aus sprödhartem Material zu erfolgen hat.

Neben der geometrischen Dimensionierung der Werkzeuge, mit denen die Oberfläche der zu behandelnden Werkstücke bearbeitet wird, und hierbei sind alternativ zum Kugelstrahlen auch Hämmer, Nägel und Walzen zu nennen, spielt insbesondere beim Kugelstrahl-Verfahren der auf die Werkstückoberfläche einwirkende kinetische Impuls eine große Rolle. Geometrie des Werkzeuges sowie die Impulseinstellung, mit der das Werkzeug gegen die zu bearbeitende Werkstückoberfläche trifft, sind dabei derart einzustellen, daß die erwünschte plastische Verformung vor dem vorzugsweise nicht zu erfolgenden Sprödbruch erfolgt, d.h., die Höhe des Impulseintrages ist so zu bemessen, daß das Ausmaß von eventuell eintretenden schädlichem Sprödbruch so weit begrenzt wird, daß der positive Einfluß der plastischen Verformung auf die Randschichtfestigkeit überwiegt.

## Patentansprüche

1. Verfahren zur Bestimmung von Verfahrensparameter zum nachfolgenden Durchführen eines Verfahrens zur Steigerung der Randschichtfestigkeit an Oberflächen von aus keramischen Werkstoffen gefertigten Werkstücken,
**dadurch gekennzeichnet,**
**daß** in einem ersten Schritt an einem Stück aus dem zu behandelnden Werkstoff die Abhängigkeit der Druckfließgrenze und der Sprödbruchgrenze von der Werkzeuggeometrie ermittelt wird, aus diesem Vorversuch die erforderliche Werkzeuggeometrie, der zulässige Impulseintrag und die Härte des zu behandelnden Werkstoffes selbst bestimmt werden, und
in einem zweiten Schritt dass die Anzahl von zulässigen, wiederholten Kugeleindrücken pro Kontaktfläche im Rahmen eines dynamischen Kugeldruckversuches ermittelt wird, die notwendig sind, um die Oberfläche plastisch zu verformen, ohne jedoch die Werkstückoberfläche zu schädigen.

## Claims

1. Method of determining process parameters for the subsequent realisation of a method of increasing the boundary layer strength on surfaces of work pieces manufactured of ceramic materials,
**characterised in**
**that** in a first step, the dependence of the compression yielding point and the brittle fracture limit on the tool geometry is determined on a piece made of the material to be processed, and that the required tool geometry, the admissible momentum to be introduced, and the hardness of the material as such, which is to be processed, are determined on the basis of this preliminary experiment, and
**that** in a second step the number of admissible repeated sphere impressions per contact area is determined in a dynamic ball thrust test, which is required for the plastic deformation of the surface, however, without damage to the work piece surface.

## Revendications

1. Procédé de détermination des paramètres opératoires pour la réalisation ultérieure d'un procédé à augmenter la résistance des couches marginales sur des surfaces des pièces fabriquées en matériaux céramiques,
**caractérisé en ce**
**que**, dans une première étape, la dépendance de la limite en fluage sous compression et la limite de rupture de la géométrie de l'outil est déterminée sur une plaque du matériau à traiter, en établissant, à la base de cet essai préliminaire, la géométrie requise de l'outil, le moment admissible à introduire, et la dureté du matériau en soi, qui requiert le traitement, et
en ce que dans une deuxième étape, le nombre admissible d'impressions répétées des sphères par aire de contact est déterminé par un essai un essai dynamique à la bille, qui sont requises pour la déformation plastique de la surface, mais sans détérioration de la surface de la pièce.
